# EUROPEAN PATENT APPLICATION

(11) **EP 4 745 550 A1**
(43) Date of publication of application: **20.05.2026**
(21) Application number: 24212616.7
(22) Date of filing: 13.11.2024
(51) Int. Cl.: G01N 1/02

(54) **HANDHELD DEVICE, METHOD AND KIT FOR PREPARATION OF A SAMPLE SOLUTION TO BE TRANSFERRED TO A SERS SUBSTRATE**

(71) Applicant: Serstech AB, 227 64 Lund (SE)
(72) Inventor: OHLIN, Markus, 226 51 Lund (SE); VAINORIUS, Neimantas, 226 54 Lund (SE)
(74) Representative: Lind Edlund Kenamets Intellectual Property AB

(57) **Abstract**

The present invention relates to a handheld device (100) for preparation of, from a trace amount (110) of a substance present on a surface (120), a sample solution (150) to be transferred to a SERS substrate (210). The device 100 comprises a receptacle (102) configured to hold a solvent (103), a tip (104) arranged at an end of the receptacle (102), and a solvent ejection device (106) configured to release the solvent (103) from the receptacle (102) onto the tip (104). The tip (104) is configured to be contacted with the trace amount (110) to collect, on the tip (104), the trace amount (110) from the surface (120). The tip (104) is solvent permeable such that the solvent (103) upon being released onto the tip (104) permeates the tip (104) and dissolves the trace amount (110) on the tip (104) thereby forming the sample solution (150). A method (400) for preparation of a sample solution (150) and a kit (400) are also provided.

## Description

### Technical Field

The invention relates to the field of Raman spectroscopy. More particularly, it is related to a handheld device and a method for preparation of, from a trace amount of a substance present on a surface, a sample solution to be transferred to a SERS substrate. A kit is also disclosed.

### Background Art

To detect and to determine different substances is highly desired in a large variety of applications ranging from chemical analysis to in-field determination of potentially hazardous, toxic or illicit substances. In many situations, a correct determination of a substance is of utmost importance. For instance, to be able to determine if a substance is hazardous, e.g. explosive, or not, is critical since it may otherwise result in severe consequences with injuries and material losses. Similarly, it may also be critical to determine if a substance is toxic or not since a wrongful determination may result in serious consequences involving personnel and environmental risks.

A common approach for detecting and identifying different substances is to use some form of spectroscopic analysis. A common type of spectroscopic analysis used is optical spectroscopy where light having interacted with the substance in question is analyzed using a spectrometer. The light interacting with the substance is scattered by the substance resulting in that the scattered light is affected by the substance. Such scattering from a substance can either be elastic or inelastic. Elastically scattered photons exhibit the same energy as the photons impinging on the substance at hand. Inelastically scattered photons, on the other hand, exhibit a different energy as compared to the photons impinging on the substance at hand. Inelastically scattered photons therefore either gain or lose energy.

Both elastically and inelastically scattered photons may be used in spectroscopic analyses of substances. When looking at elastically scattered photons certain properties of the substance may be determined. However, when it comes to determining a certain substance more sophisticated spectroscopic techniques also relying on inelastically scattered photons are generally required.

Raman spectroscopy is a spectroscopic technique relying on inelastic scattering of photons, known as Raman scattering. In Raman spectroscopy a source of monochromatic light, usually a laser, is used. The light source may emit light in the visible, near infrared, or near ultraviolet range, although X-rays can also be used. The laser light interacts with molecular vibrations, phonons, or other excitations in the molecular system, resulting in that the energy of the laser photons being shifted up or down in the inelastically scattered light thereof. The shift in energy gives information about the vibrational modes in the molecular system at hand. In other words, inelastically scattered light from the molecules of the substance at hand gives rise to a vibrational spectrum that includes of a series of lines or peaks constituting a molecular "fingerprint" of the substance. Hence a substance or material will give rise to a unique Raman spectrum, i.e. its "fingerprint". The unique Raman spectrum makes Raman spectroscopy suitable for identifying or determining substances or materials. In many fields of technology Raman spectroscopy is a well-established spectroscopic technique for rapid identification of substances and chemicals with a high degree of accuracy.

However, the light from Raman scattering is typically associated with weak intensities and may be difficult to observe. Typically, 1 out of 10⁶ - 10⁹ photons scattered by a sample is a photon relating to a Raman scattering. When only a small amount of a substance is available for analysis, Raman spectroscopy may become troublesome or even impossible. Therefore, when only a very small amount of a substance is available, such as trace of a substance at a crime scene, or a trace of a substance unintentionally left at a surface, it is favorable to utilize surface-enhanced Raman spectroscopy referred to as SERS. SERS is a surface-sensitive technique which enhances Raman scattering by molecules or substances adhered to or adsorbed on functionalized surfaces commonly referred to as SERS surfaces or SERS substrates. Generally, such SERS surfaces include rough metal surfaces, metalized surfaces or surfaces covered with metalized nanostructures, such as metalized silicon nanowires. SERS, as compared to standard Raman spectroscopy, is highly favorable for determining small amounts of substances, since the enhancement factor can be as much as 10¹⁰ to 10¹¹ as compared to standard Raman spectroscopy. Thus, SERS is capable of detecting very small amounts of a substance or even single molecules.

However, in order to be able to conduct SERS measurements the substance to be determined needs to be accurately adhered to or adsorbed on a SERS surface. In a laboratory, a substance can generally be dissolved and diluted to a correct level and thereafter accurately adhered to a SERS surface.

However, during field conditions, such as when law enforcement personnel operates on the streets or when customs personnel are to inspect goods, it is difficult to correctly dilute a small amount of a substance and accurately adhere the same to a SERS surface. Today, when a small amount of a substance is to be determined under field conditions, it is common practice to swab up the substance using a swab or cloth. The swab or cloth is then put into a container filled with a solvent to form a solution. The solution is in turn dripped onto a SERS surface. In case a very limited amount of substance is available, there is an outspoken risk that the substance becomes too diluted. Another problem resides in that it is difficult to drip a correct amount of solution onto the SERS surface. Yet another problem resides in that personal protective equipment, PPE, is typically used when sampling unknown substances in during field conditions. Such PPE typically include thick gloves, making it very difficult to handle swabs, cloths, small containers, pipettes and the like required to accurately form and adhere a solution including a small amount of a substance.

### Summary

With the above in mind, it is an objective of the present invention to provide an improved handheld device as well as in improved method for preparation of a sample solution.

More specifically, it is an objective to provide an improved handheld device for preparation of, from a trace amount of a substance present on a surface, a sample solution to be transferred to a SERS substrate.

Another objective is to provide such a device which is capable preparing a sample solution from a small or reduced amount of a substance, which sample solution is suitable to be adhered to or adsorbed on a SERS substrate to subsequently be analyzed using a Raman spectroscopy device.

Another objective is to provide such a device which is capable of collecting a trace amount of a substance from a surface and preparing a sample solution including the substance in a simplified manner using a single device.

Another objective is to provide such a device which is capable of collecting a trace amount of a substance from a surface, preparing a sample solution including the trace amount and transferring the sample solution to a SERS substrate in a simplified manner using a single device.

Another objective is to provide such a device which is capable of collecting a trace amount of a substance from a surface and preparing a sample solution including the substance in a simplified manner using a single device while using only one hand.

Another objective is to provide such a device which is capable of collecting a trace amount of a substance from a surface, preparing a sample solution including the trace amount and transferring the sample solution to a SERS substrate in a simplified manner using a single device while using only one hand.

Another objective is to provide such a device which is safe to use by minimizing the number of components and actions required by an operator to form a sample solution, from a trace amount of a substance, to be transferred to a SERS substrate.

Another objective is to provide such a device which is cost-effective.

Another object is to provide an improved kit including such a device.

To achieve at least one of the above objects and also other objects that will be evident from the following description, a handheld device for preparation of, from a trace amount of a substance present on a surface, a sample solution to be transferred to a SERS substrate, having the features defined in claim 1 is provided according to the present inventive concept. A method for preparation of, from a trace amount of a substance present on a surface, a sample solution to be transferred to a SERS substrate, using such a device is provided according to claim 11. A kit comprising among other things such a device is provided according to claim 14.

More specifically, according to a first aspect, there is provided a handheld device for preparation of, from a trace amount of a substance present on a surface, a sample solution to be transferred to a SERS substrate, comprising:
a receptacle configured to hold a solvent,
a tip arranged at an end of the receptacle, and
a solvent ejection device configured to release the solvent from the receptacle onto the tip,
   wherein the tip is configured to be contacted with the trace amount to collect, on the tip, the trace amount from the surface, and wherein the tip is solvent permeable such that the solvent upon being released onto the tip permeates the tip and dissolves the trace amount on the tip thereby forming the sample solution.

Hereby an improved handheld device is provided.

The handheld device or device is designed for, and hence suitable for preparation of, from a trace amount of a substance present on a surface, a sample solution to be transferred to a SERS substrate. Further, the device is designed for preparing such a sample solution using only one hand. Further, the device is designed for preparing such a sample solution using only one hand while wearing a PPE glove. Furthermore, the device is designed such that such a sample solution may be prepared using a single grip, i.e. where the device may be constantly held in the same grip, using the same hand, while preparing the sample solution. Moreover, the sample solution may be transferred to a SERS substrate using the very same grip. Thus, the device is designed such that it is capable of collecting a trace amount of a substance and dissolving the trace amount to form a sample solution. Thus, the device is designed such that it is capable of collecting a trace amount of a substance, dissolving the trace amount to form a sample solution and transferring the sample solution to a SERS substate.

It should be noted that within the context of this application the term "trace amount of a substance" may mean any amount of a substance not exceeding 1 mg. Thus, the device is designed for and hence suitable for preparation of a sample solution from 1 mg or less of substance. However, the device may for natural reasons be used to prepare a sample solution to be transferred to a SERS substrate from an amount of a substance exceeding 1 mg. In fact, the device may be used to prepare a sample solution to be transferred to a SERS substrate from any amount of a substance exceeding 1 mg by collecting a small amount of the substance on the tip.

It should be noted that within the context of this application the term "substance" may mean any chemical substance. Thus, a substance may include a single type of atoms or molecules or be formed of a mixture of different types of atoms and/or molecules. Typically, a substance may be a chemical substance of interest related to chemical warfare agents, CWA, chemical weapons, biological weapons, radiological weapons, nuclear weapons and explosives, CBRNe or narcotics.

It should be noted that within the context of this application the term "present on a surface" may mean that the trace amount of the substance is present on any type of surface attributable to any type of object. Thus, the trace amount of the substance may be present anywhere when being collected by the device.

By the device comprising a receptacle configured to hold a solvent, the device may be prepared by filling the receptacle with a solvent prior to use. Thus, the device may be prepared under controlled conditions, e.g. prior to entering field conditions. In this way, the need to handle solvents under filed conditions may be eliminated or significantly reduced, thereby reducing the risk of exposing personnel to potentially hazardous solvents.

By the device comprising a tip arranged at an end of the receptacle in combination with a solvent ejection device configured to release the solvent from the receptacle onto the tip, the tip may readily receive solvent from the receptacle when being released therefrom.

By the tip being configured to be contacted with the trace amount to collect, on the tip, the trace amount from the surface, the tip may efficiently collect and hold the trace amount. To this end, the tip may have a surface topology or roughness providing for an efficient collection of the trace amount of the substance. Further, the tip may be porous such that the trace amount may be collected in pores of the tip. Further, the tip may have a surface topology or roughness providing for an efficient removal of the trace amount from the surface in case the trace amount has adhered or sticked to the surface.

By the tip being solvent permeable, the solvent may be fed from the receptacle into the tip and further out of the tip on a side of the tip facing away from the receptacle. In this way, the solvent may dissolve the trace amount on the tip. Thus, the solvent may efficiently and accurately dissolve the trace amount on the tip thereby forming the sample solution.

The device may be designed for single use.

The device may be disposable.

The device may may be designed for multiple uses.

The tip may taper towards a distal end thereof, which is advantageous in that the tip may promote droplet formation of the sample solution. More specifically, the tip may promote droplet formation at specific location of the tip, i.e. its distal end. Moreover, by the tip tapering towards a distal end thereof, an increased ability of collecting the trace amount of the substance in tight spaces may be achieved. For instance, the tip may be capable of reaching into small cracks, gaps or corners by tapering towards its distal end.

The distal end of the tip may have a tip angle of 20-60 degrees, such as 30-50 degrees.

The distal end of the tip may have a tip angle of 20-60 degrees.

The distal end of the tip may have a tip angle of 30-50 degrees.

The tip may however be rounded at its outermost distal end to e.g. make the tip more robust and less prone to getting damaged or releasing material of the tip when used to collect the trace amount.

The tip may comprise one or more of a felt material, a non-woven material, a woven material, a flocked material, a set of bristles, a foamed material, a porous material, a fibrous material, a set of microchannels, a set of microchannels formed from metal, porous polyethylene, fibrous polyethylene, flocked polyethylene, flocked nylon, polyurethane foam, polyester, nylon, polyethylene, polypropylene, polystyrene, acrylonitrile butadiene styrene, a thermoplastic elastomer, thermoplastic polyurethane, silicone, and rayon. By the tip comprising one or more of the above-listed materials, a tip which capable of efficiently collecting a trace amount from a surface may be realized. Further, the properties of the tip may be tailored by using different materials or different material combinations.

The tip may be releasably attached to the device.

The tip may be designed for single use.

The tip may be disposable.

The solvent ejection device may be configured to release a predetermined volume of solvent in response to being actuated, which is advantageous in that a predetermined volume of sample solution may be formed in a controlled manner. In this way, a predetermined volume of sample solution may be formed with a significantly reduced risk of diluting the trace amount too much or too little in the solvent.

By "actuating the solvent ejection device" is here meant any action of the solvent ejection device which aims at releasing at least a portion of the solvent held in the receptacle.

The solvent ejection device may comprise a dosing pipette.

The solvent ejection device may comprise a dosing dispenser.

The solvent ejection device may be configured to release the predetermined volume of solvent only one time.

The solvent ejection device may be configured to release the predetermined volume of solvent one or more times.

The solvent ejection device may be configured to release the predetermined volume of solvent one or more times in response to repeatedly actuating the solvent ejection device.

The predetermined volume of solvent may correspond to a volume of solvent required saturate the tip and a surplus volume in a range of 25 µl to 250 µl, such as 50 µl to 150 µl, which is advantageous in that a highly controlled amount of sample solution may be formed while at the same time accounting of the amount of solvent which may be held by the tip itself. In this way, a volume corresponding to the surplus volume may be available for being transferred to a SERS substrate. In practice, the surplus volume may correspond to, or substantially correspond to, a volume of the prepared sample solution. More specifically, the trace amount, or a substantial amount of the trace amount, collected on the tip may end up in the surplus volume. Thus, in this way, a sample solution having a volume in a range of 25 µl to 250 µl, such as 50 µl to 150 µl, may be formed.

The solvent ejection device may comprise a piston arranged in the receptacle and configured to release the solvent from the receptacle onto a proximal end of the tip in response to being pushed or screwed along the receptacle towards the tip, which is advantageous in that the solvent may be released onto the tip in a controlled manner. Moreover, the risk of spilling the solvent may be significantly reduced as compared to state of the art solutions where the solvent is forced out of a receptacle by squeezing the same.

The receptacle may be provided with a scale such that a position of the piston in relation to the tip may be read out by e.g. an operator of the device.

The receptacle may be provided with a scale such that a position of the piston may be correlated to a volume of solvent released onto the tip by e.g. an operator of the device.

The piston may be configured to move a predetermined distance along the receptacle in response to being pushed or screwed along the receptacle towards the tip, such that the predetermined volume of solvent is released from the receptacle onto the tip, which is advantageous in that a predetermined volume may be released from the solvent ejection device with a significantly reduced risk of releasing too much solvent. Correspondingly, a predetermined volume may be released from the solvent ejection device with a significantly reduced risk of releasing too little solvent. In practice, an operator may simply actuate the solvent ejection device in order to release a predetermined volume of solvent. Further, an operator wearing PPE gloves may actuate the solvent ejection device in a blunt or inelegantly manner and still release a predetermined volume of solvent.

The device may further comprise an attachment arrangement configured to releasably attach the device to a substrate holder in a predetermined position in relation to the substrate holder, which is advantageous in that the tip may be held in a predetermined position in relation to a substrate, given that a substrate is held in the substrate holder. In practice, the tip may be held in a predetermined position in relation to a SERS substrate. In this way, the sample solution may be transferred to a SERS substrate in a way where the sample solution is transferred to a certain location of the SERS substrate. Moreover, the sample solution may be transferred to such a SERS substrate with a significantly reduced risk of spilling sample solution in an undesired location. Further, an operator wearing PPE gloves may transfer the sample solution to the SERS substrate with a significantly reduced risk of spilling sample solution.

By "attachment arrangement" is here meant any type of arrangement, feature or similar which is capable of releasably attaching the device to a substrate holder.

The attachment arrangement may for instance include a flange configured to engage an opening or a slit.

The attachment arrangement may for instance include one or more protrusions or prongs configured to engage a respective indentation or groove.

The attachment arrangement may for instance include one or more protrusions or prongs configured to engage a surface defining an opening.

The attachment arrangement may for instance include a magnet configured to force or bias the device into the predetermined position in relation to the substrate holder.

The attachment arrangement may comprise a circumferential inwardly facing surface, proximal of the tip, configured to engage a collar circumscribing an opening of the substrate holder, such that the tip extends into the substrate holder via the opening, which is advantageous in that the tip may be held in a predetermined position in relation to a substrate, given that a substrate is held in the substrate holder, while at the same time being located within the substrate holder. In practice, the tip may be held in a predetermined position in relation to a SERS substrate, while at the same time being located within the substrate holder. In this way, the SERS substrate may be protected from the ambient while e.g. transferring the sample solution to the SERS substrate. Correspondingly, the sample solution may be protected from the ambient while being transferred to the SERS substrate. Thus, the SERS substrate and the sample solution may be protected from being contaminated. Moreover, the sample solution may be prevented or counteracted from escaping to the ambient, which is particularly relevant in case of a hazardous sample solution of some form.

Further, by the attachment arrangement comprising a circumferential inwardly facing surface, a firm but still releasable attachment may be provided between the device and the substrate holder.

The attachment arrangement may comprise a flange, proximal of the tip, configured to engage an opening of the substrate holder, such that the tip extends into the substrate holder via the opening.

According to another aspect of the invention, there is provided a method for preparation of, from a trace amount of a substance present on a surface, a sample solution to be transferred to a SERS substrate, using a device according to the first aspect, the method comprising:
collecting, on the tip, the trace amount from the surface by contacting the tip with the trace amount, and
dissolving the trace amount on the tip by releasing the solvent onto the tip, thereby forming the sample solution.

In general, features of this aspect provide similar advantages as discussed above in relation to the first aspect. Consequently, said advantages will not be repeated in order to avoid undue repetition.

The method may further comprise transferring the sample solution to the SERS substrate by releasing, from the tip, a sample volume of the sample solution onto the SERS substrate. Thus, by releasing, from the tip, a sample volume of the sample solution onto the SERS substrate, the trace amount of the substance, or a portion of the trace amount of the substance, being collected on the tip may be transferred to the SERS substrate via the sample volume of the sample solution. The sample volume of the sample solution may typically correspond to a portion of a volume of the sample solution. However, the sample volume of the sample solution may correspond to a volume of the sample solution.

The method may further comprise evaporating, at least a major portion of the solvent of the sample volume, and subsequently analyzing, by a Raman spectroscopy device, the SERS substrate to determine the substance. Thus, by evaporating, at least a major portion of the solvent of the sample volume, the trace amount of the substance, or the portion of the trace amount of the substance, which has been transferred to the SERS substrate in the sample volume may be adhered to or adsorbed on the SERS substrate. In this way, the SERS substrate may be prepared for a SERS measurement using a Raman spectroscopy device.

Further, by analyzing, by a Raman spectroscopy device, the SERS substrate to determine the substance, the substance may be determined via its unique Raman spectrum, i.e. via its "fingerprint" or "molecular fingerprint".

According to another aspect of the invention, there is provided a kit comprising:
a device according to the first aspect,
a SERS substrate, and
a substrate holder configured to receive and hold the SERS substrate in a substrate location underneath an opening of the substrate holder, the opening being configured to selectively receive, the tip and light from a light exit aperture of a Raman spectroscopy device.

In general, features of this aspect provide similar advantages as discussed above in relation to the previous aspects. Consequently, said advantages will not be repeated in order to avoid undue repetition.

By the substrate holder being configured to receive and hold the SERS substrate in a substrate in a location underneath an opening of the substrate holder, the SERS substrate may be accessed through the opening. In other words, the SERS substrate may be available via the opening while being located within the substrate holder.

Further, by the opening of the substate holder being configured to selectively receive, the tip and light from a light exit aperture of a Raman spectroscopy device, the sample volume of the sample solution may be transferred from the device to the SERS substrate via the opening. Correspondingly, the substance (of the trace amount), when adhered to or adsorbed on the SERS substrate, may be analyzed by means of a Raman spectroscopy device by shing light from a light exit aperture of the Raman spectroscopy device through the opening of the substrate holder and onto the SERS substrate.

The kit may further comprise a solvent of a first type, and optionally a solvent of a second type, different from the first type, to be received in the receptacle. Thus, the kit may comprise a solvent of a first type for preparation of the sample solution.

Moreover, the kit may optionally comprise a solvent of a second type, where the second type is different from the first type. Thus, the kit may comprise more than one type of solvents. In this way, different solvents suitable for different types of substances may be comprised in the kit.

Suitable solvents include but are not limited to methanol, ethanol, acetonitrile, isopropyl alcohol, methyl acetate, ethyl acetate, acetone, water and dichloromethane.

As is known in the art, different types of solvents are suitable to dissolve and hence dilute different types of substances. For instance, polar solvents may advantageously be used to dissolve polar substances. Correspondingly, non-polar solvents may advantageously be used to dissolve non-polar substances. To this end, an operator of the device may select a solvent suitable for a certain substance being investigated or being assumed to be at hand. Moreover, in practice, some solvents are generally suitable for dissolving narcotics, whereas other solvents are generally suitable for dissolving hazardous substances, such as explosives.

However, methanol is commonly a first choice or a good starting point, since methanol efficiently dissolves a wide range of substances, including narcotics, explosives and toxic substances.

A further scope of applicability of the present invention will become apparent from the detailed description given below. However, it should be understood that the detailed description and specific examples, while indicating preferred embodiments of the invention, are given by way of illustration only, since various changes and modifications within the scope of the invention will become apparent to those skilled in the art from this detailed description.

Hence, it is to be understood that this invention is not limited to the particular component parts of the device described as such device may vary. It is also to be understood that the terminology used herein is for the purpose of describing particular embodiments only and is not intended to be limiting. It must be noted that, as used in the specification and the appended claim, the articles "a," "an," "the," and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings does not exclude other elements or steps.

Thus, throughout this specification, unless the context requires otherwise, the word "comprise" or variations such as "comprises" or "comprising", will be understood to imply the inclusion of a stated integer or group of integers but not the exclusion of any other integer or group of integers.

### Brief Description of the Drawings

The above and other aspects of the present inventive concept will now be described in more detail, with reference to appended figures showing variants. The figures should not be considered limiting, instead, they are used for explaining and understanding.

As illustrated in the figures, the sizes of layers and regions may be exaggerated for illustrative purposes and, thus, are provided to illustrate the general structures of variants. Like reference numerals refer to like elements throughout.
Fig. 1 is a schematic perspective view of a handheld device for preparation of, from a trace amount of a substance present on a surface, a sample solution to be transferred to a SERS substrate.
Fig. 2A is a schematic cross-sectional view of the device of Fig. 1.
Fig. 2B is a partial a schematic cross-sectional view of the device of Fig. 1 when used collect a trace amount of substance.
Fig. 2C is a partial a schematic cross-sectional view of the device of Fig. 1 when used to form a sample solution from the trace amount.
Fig. 3 is a schematic perspective view of a kit comprising the device of Fig. 1, a SERS substrate and a substrate holder. Fig. 3 additionally depicts solvents in containers.
Fig. 4A is a perspective view in which the device of Fig. 3 has been releasably attached to the substrate holder.
Fig. 4B is a perspective view in which a handheld Raman spectroscopy device has been releasably attached to the substrate holder.
Fig. 5 is a flow chart of a method for preparation of, from a trace amount of a substance present on a surface, a sample solution to be transferred to a SERS substrate.

### Detailed description

The present inventive concept will now be described more fully hereinafter with reference to the accompanying drawings, in which currently preferred variants of the inventive concept are shown. This inventive concept may, however, be implemented in many different forms and should not be construed as limited to the variants set forth herein; rather, these variants are provided for thoroughness and completeness, and fully convey the scope of the present inventive concept to the skilled person.

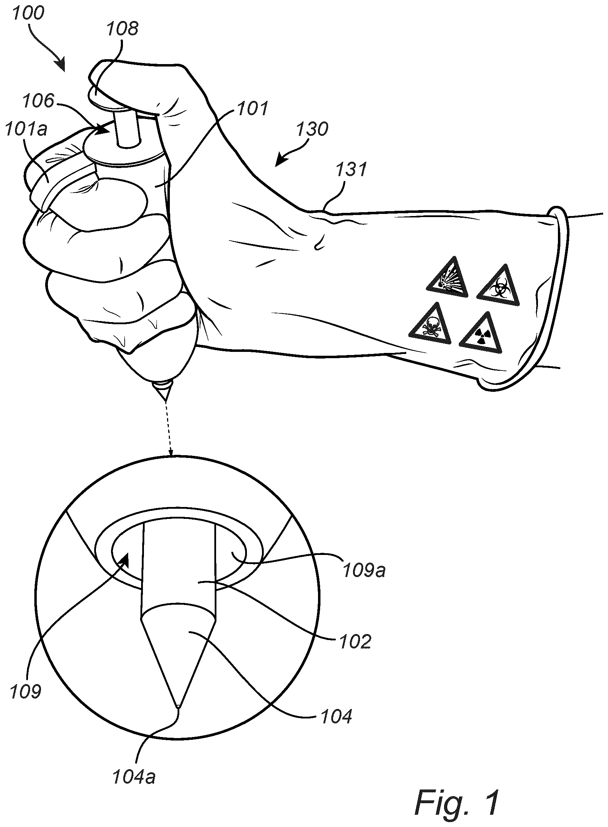

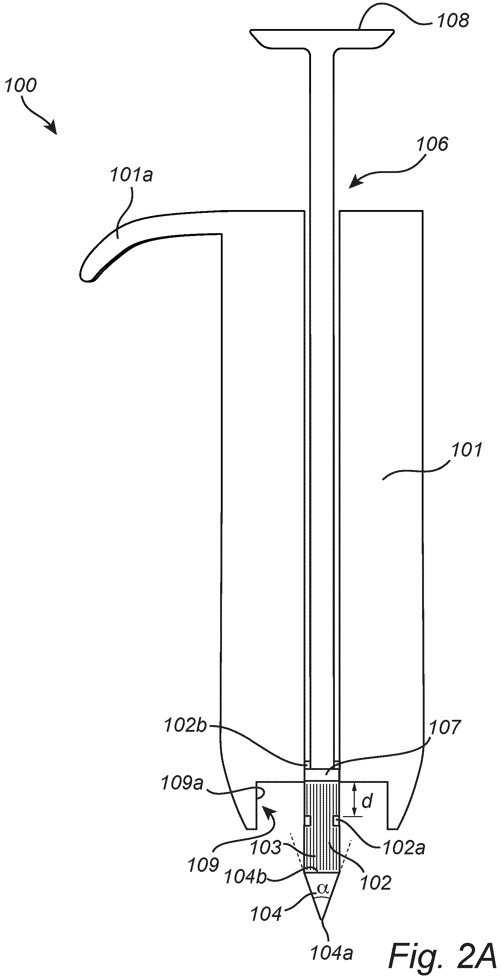

Now turning to Fig. 1 and Figs. 2A-C. Fig. 1, like Fig. 2A, schematically illustrates a handheld device 100. Fig. 1 is a perspective view of the handheld device 100 while Fig. 2A is a cross-sectional view of the handheld device 100. The handheld device 100 is a device 100 for preparation of a sample solution 150 from a trace amount 110. The device 100 is designed such that it may be held and operated by a single hand 130 of an operator of the device 100 as illustrated id Fig. 1. Further, the device 100 is formed with a thick handle portion 101 allowing for a firm and ergonomic grip of the device. Specifically, the handle portion 101 is formed such that the device 100 may be held safely by a single hand 130 even if the hand 130 is covered by a relatively speaking thick PPE glove 131 as illustrated in Fig. 1. Moreover, the device 100 is formed such that it may be operated with a single hand 130 using a single grip. In other words, the device 100 is formed such that it may be operated without changing grip.

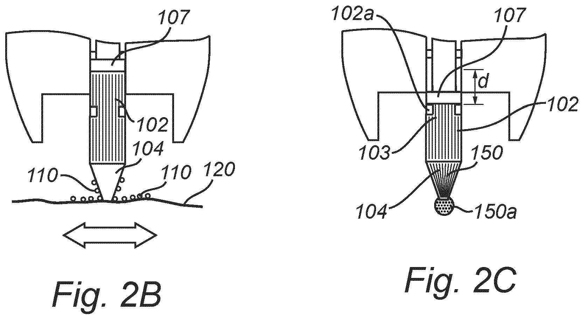

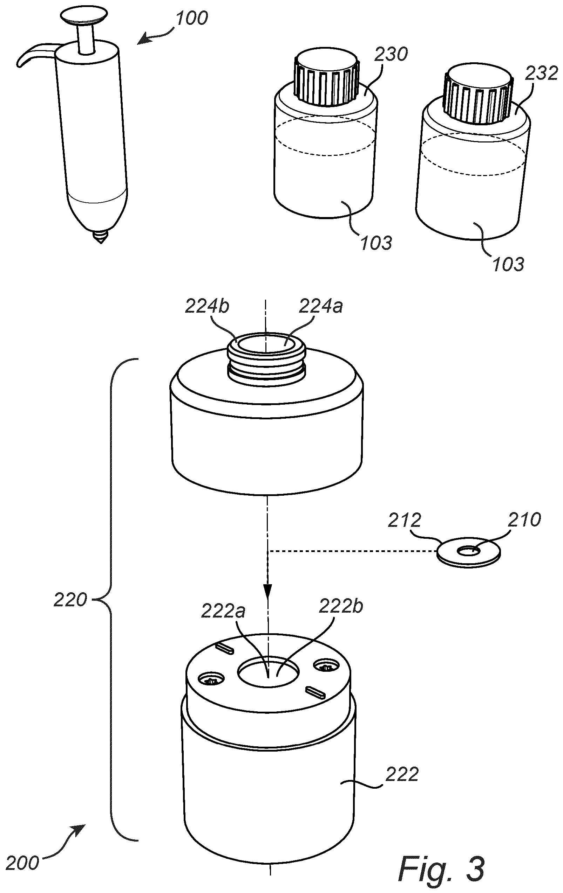

More specifically, the device 100 is designed preparation of, from a trace amount 110 of a substance present on a surface 120, a sample solution 150. A trace amount 110 on a surface 120 is schematically depicted in Fig. 2B, while the prepared sample solution 150 is schematically illustrated in Fig. 2C. In practice, the device 100 is tailormade to prepare a sample solution 150 suitable for preparing a sample in form of a SERS substrate 210 (in Fig. 3) to which the sample solution 150 has been adhered. The SERS substrate 210 may in turn undergo a SERS analysis to determine the substance. In other words, the sample solution 150 may be prepared in order to be transferred to a SERS substrate as will be described further below in conjunction to describing Fig. 3. Typically, the sample solution 150 is prepared in order to be transferred to a SERS substrate which in turn may be analyzed by a Raman spectroscopy device to determine substance as will be described further below in conjunction to describing Fig. 3.

The device 100 includes a receptacle 120. The receptacle 120 is configured to hold a solvent 103. In the depicted device 100 of Figs. 1 and Figs. 2A-C, the receptacle 102 has a generally cylindrical shape. The receptacle 102 may however have any suitable shape while being configured to hold a solvent 103.

The device includes a tip 104. The tip 104 is arranged at an end of the receptacle 102. As best illustrated in Fig. 2A, the tip 104 is arranged at a lower and of the device 100. In this regard, it is to be noted that the wording lower refers to when the device 100 is held in an upright position as illustrated in Fig. 1. The tip 104 is configured to be contacted with the trace amount 110. More specifically, the tip 104 is configured to be contacted with the trace amount 110 to collect, on the tip 104, the trace amount 110 from the surface 120 i.e. as illustrated in Fig. 2B. In practice, the tip 104 may be rubbed or swabbed against the surface 120 to collect the trace amount 110. In other words, the tip 104 may be used to swab up the trace amount 110 from the surface 120 as schematically indicated by a double arrow in Fig. 2B.

The device 100 includes a solvent ejection device 106. The solvent ejection device 106 is configured to release the solvent 103 from the receptacle 102 onto the tip 104. More specifically, the solvent ejection device 106 is configured to release the solvent 103 from the receptacle 102 onto the tip 104 in response to being actuated. In the depicted device 100, the solvent ejection device 106 includes a piston 107 which forces the solvent 103 to be released from the receptacle 102 onto the tip 104 in response to pushing the knob 108 at the top of the device 100. As best illustrated in Fig. 2A, the knob 108 may be provided at an upper end of the piston 107.

The tip 104 of the depicted device of Figs. 1 and Figs. 2A-C is solvent permeable. By the tip 104 being solvent permeable, the solvent 103 will upon being released onto the tip permeate the tip 104. Further, upon permeating the tip 104, the solvent will flow through the tip 104 and reach an outside of the tip 104 where the collected trace amount 110 is primarily located. As a result, the solvent will dissolve, or partially dissolve, the trace amount 110 on the tip 104. In other words, the solvent 103 will dissolve the trace amount 110 collected on the on the tip 104 when permeating the tip 104. Thus, when the solvent 103 permeates the tip and dissolves the trace amount 110, the sample solution 150 is formed.

The tip 104 tapers towards a distal end 104a thereof as e.g. illustrated in Figs. 1 and 2A. The fact that the tip 104 tapers towards its distal end provides for a controlled droplet formation of the sample solution 150 at the distal end 104a of the tip 104 as illustrated in Fig. 2C. Moreover, a tapering tip allows for a more efficient collection of a trace amount 110 as well as an ability to collect a trace amount from a thighs space, like a crack or a corner.

The distal end 104a of the tip 104 of the depicted device 100 has a tip angle α of 40 degrees. It is to be noted that the outermost part of the tip 104 may be rounded while still exhibiting a tip angle α.

After significant experimentation, it is currently believed that a tip angle α of 30-50 degrees allows for an optimal balance between robustness, droplet formation and the ability to collect a trace amount from a tight space.

Other tip angles α, such as 20-60 degrees, are however conceivable. Tip angles α in a range of 20-60 degrees have proved particularly useful in terms of robustness and droplet formation.

The tip 104 of the depicted device 100 of Figs. 1 and Figs. 2A-C is formed of a porous polyethylene material. The porous polyethylene material of the tip 104 is a felt-like material. Further, the material of the tip 104 is sturdy in the sense that it may be used to rub a surface 120. However, the material of the tip 104 is flexible such that that it may follow surface contours and enter into irregularities of the surface 120. Further, since the material of tip 104 is porous, it may efficiently collect a trace amount 110 from the surface. Thus, the material of the tip 104 may temporarily hold such trace amount 110. Further, since the material of tip 104 is porous, it may be permeated by a solvent 103 such that the solvent 103 dissolves the trace amount 102 on the tip and forms the sample solution 150.

Significant experimentation has shown that a tip 104 of a porous polyethylene material is highly efficient for collecting a trace amount 110 as well as for forming a sample solution 150 while using different types of solvents.

The tip 104 may however be formed of different materials having different properties. To this end, the tip 104 may comprises one or more of a felt material, a non-woven material, a woven material, a flocked material, a set of bristles, a foamed material, a porous material, a fibrous material, a set of microchannels, a set of microchannels formed from metal, a porous polyethylene, fibrous polyethylene, flocked polyethylene, flocked nylon, polyurethane foam, polyester, nylon, polyethylene, polypropylene, polystyrene, acrylonitrile butadiene styrene, a thermoplastic elastomer, thermoplastic polyurethane, silicone, and rayon.

As described above, the solvent ejection device 106 of the depicted device 100 of Figs. 1 and Figs. 2A-C includes a piston 107. The piston 107 is arranged in the receptacle 120 and configured to release solvent from the receptacle 102 onto a proximal end 104b of the tip 104. More specifically, the piston 107 is configured to release solvent from the receptacle 102 onto a proximal end 104b of the tip 104 in response to being pushed along the receptacle 102 towards the tip 104. Alternatively, the piston 107 may be configured to release solvent from the receptacle 102 onto a proximal end 104b of the tip 104 in response to being screwed along the receptacle 102 towards the tip 104.

The solvent ejection device 106 of the depicted device 100 of Figs. 1 and Figs. 2A-C is configured to release a predetermined volume of solvent 103 in response to being actuated. To this end, the stroke length of the piston 107 is be adapted such that the piston may move a predetermined distance d. In other words, the stoke length of the piston 107 is adapted such that the piston 107 is allowed to move the predetermined distance d along the receptacle 102 in response to being pushed (or screwed) along the receptacle 102 towards the tip 104. In this way, a predetermined volume of solvent 103 may be released from the receptacle 102 onto the tip 104 as a result of pushing the piston 107 along the receptacle 102 towards the tip 104.

In order to realize that the piston 107 may move a predetermined distance d along the receptacle 102 different strategies may be employed. To this end, an interior surface of the receptacle 102 may be provided with a stop 102a which delimits how far the piston 107 may be moved towards the tip 104, like in the depicted device 100 of Figs. 1 and Figs. 2A-C.

In Fig. 2C, the piston 107 has been pushed down the predetermined distance d such that the piston has reached the stop 102a. In this way, a predetermined volume of the solvent 103 has been released onto the tip 104. As a result, the sample solution 150 has been formed by dissolving the trace amount 110 collected on the tip 104, see Fig. 2B. As schematically illustrated in Fig 2C, the sample solution may form a droplet 150a on the tip 104.

The predetermined volume released on the tip 104 by pushing the piston 107 the predetermined distance d from its initial position to the stop 102a of the depicted device corresponds to a volume of solvent required saturate the tip 104 and a surplus volume of 100 µl. Thus, 100 µl of sample solution 150 will be readily available to be transferred from the device 100 to a SERS substrate.

After significant experimentation it is currently believed that when the predetermined volume of solvent corresponds to a volume of solvent required saturate the tip and a surplus volume in a range of 50 µl to 150 µl, an optimal balance between efficiently dissolving the trace amount 110 at useful concentration and providing a sufficient amount of sample solution 150 may be achieved. Said significant experimentation has further shown that a concentration in a range of 0,1 to 1 mM may be achieved by a surplus volume in a range of 50 µl to 150 µl. A concentration in a range of 0,1 to 1 mM is currently believed to be an optimal concentration of the sample solution 150.

Other surplus volumes, such as 25 µl to 250 µl, are however conceivable. Surplus volumes in a range of 25 µl to 250 µl has proved particularly useful in terms of providing a useful sample solution 150 having a sufficient volume to be transferred to a SERS substrate.

Further, the overall stroke length of the piston 107 may be such that a predetermined volume of solvent 103 is released by pushing the piston 107 to an ultimate position (end position) towards the tip 104.

Further, a plurality of stops 102a may be provided at regular intervals at the interior surface of the receptacle 102, where the stops 102a are each configured to delimit delimits how far the piston 107 may be moved towards the tip 104, while at the same time allowing the piston 107 to be pushed past the stops 102a in response to increasing the pressure on the knob 108. Thus, in this way a predetermined volume of solvent 103 may be released multiple timed by repeatedly pushing the knob 108 past a respective stop 102a.

Moreover, the interior surface of the receptacle 102 may be provided with an upper stop 102b which delimits how far the piston 107 may be moved away from the tip 104, like in the depicted device 100 of Figs. 1 and Figs. 2A-C. In this way, it may be enabled that a desired volume of solvent may be drawn into the receptacle 102 by pulling the piston 107 away from the tip 104.

Another strategy for realizing that the piston 107 may move a predetermined distance d along the receptacle 102 includes incorporating a dosing pipette in the solvent ejection device such that a predetermined volume of solvent 103 may be released by pushing the knob 108.

Another strategy for realizing that the piston 107 may move a predetermined distance d along the receptacle 102 includes incorporating a dosing dispenser in the solvent ejection device such that a predetermined volume of solvent 103 may be released multiple times by repeatedly pushing the knob 108.

In case the device 100 is designed such that a predetermined volume of solvent 103 may be released multiple times by repeatedly pushing the knob 108, the tip 104 may to advantage be replaceable such that a new tip 104 may be used at each time the predetermined volume of the solvent 103 is released. Such replaceable tip 104 may to advantage be a disposable tip 104.

Another advantage of utilizing a releasable tip 104 is that the type of tip may be adapted to different types of substances. Thus, the type of tip 104 may be selected based on which type of trace amount 110 is to be collected.

However, the entire device 100 may be a single use device 100. In other words, the device 100 may disposable. In case the device 100 is used in conjunction with hazardous or toxic substances, there may be safety-related advantages of discarding and safely destroying the entire device 100 after it has been used.

The handle portion 101 of the device 100 may be provided with anti-slid features like intents, bumps, finger-adapted grooves or similar. Moreover, the handle portion 101 of the device 100 may be made of, or coated with, a high-friction material such as rubber or an abrasive.

As illustrated in Figs. 1 and 2A, the handle portion 101 of the device 100 may be provided with stopper 101a for preventing or counteracting that the device slips e.g. when pressing the knob 108. The stopper 101a may have a hooked shape preventing that the hand 130 of an operator slips past the stopper 101a.

Now also turning to Fig. 3. Fig. 3 illustrates a kit 200. The kit 200 includes a device 100 of the type described above. The device 100 in Fig. 3 is not drawn to scale but is included in Fig. 3 to clearly illustrate to contents of the kit 200. The kit 200 further includes a SERS substrate 210 and a substrate holder 220. Fig. 3 additionally illustrates two solvents 103 of different types in respective containers 230, 232 which optionally may be included in the kit 200. The depicted solvents 103 are provided in the kit 200 to be received in the receptacle 102 of the device 100, i.e. as have been described above. In practice, one container 230 may comprise a solvent 130 of a first type, and the other container may comprise a solvent 103 of a second type, different from the first type. It is, however, to be understood that any number of containers 230, 232 and any number of different solvents 103 may optionally be included in the kit 200.

The depicted SERS substrate 210 of Fig. 3 is mounted to a carrier 212. The SERS substrate 210 is fixedly mounted or attached to the carrier 212. The SERS substrate 210 is configured for a single use. To this end, the SERS substrate 210 and the carrier 212 are disposable. The depicted SERS substrate 210 includes a functionalized surface in form of a SERS surface. The SERS surface faces upwards in Fig. 3. The functionalized surface of the SERS substrate 210 includes silver coated nanowires. However, other types of SERS surfaces may be used on the SERS substrate 210 to advantage.

The substrate holder 220 includes two major parts 222, 224 in the form of a lower part 222 and an upper part 224. The upper part 224 may be releasably attached to the lower part 222.

The lower part 222 is configured to receive and hold the SERS substrate 210 in a substrate location 222a by means of the carrier 212. In order to insert the SERS substrate 210 into the substrate location 222a, the upper part 224 of the substrate holder 220 is removed as schematically illustrated in Fig. 3. The upper part 224 may protect the SERS substrate 210 by being re-placed on the lower part 222 once the SERS substrate 210 has been inserted in the substrate location 222a. The SERS substrate 210 of Fig. 3 is inserted into the substrate location 222a by placing the carrier 212 in a recess 222b of the lower part 222. The depicted carrier of Fig. 3 comprises a magnetic material and the lower part 222 of the depicted substrate holder comprises a magnet which releasably holds the carrier 212 once inserted into the recess 222b. As a result, the SERS substrate is held in the substrate location 222a. The substrate location 222a of the depicted substrate holder 220 is centered in relation to the substrate holder. As a result, the substrate location 222a (and the SERS substrate 210 when present) is located underneath an opening 224a formed in the upper part 224 of the substrate holder 220.

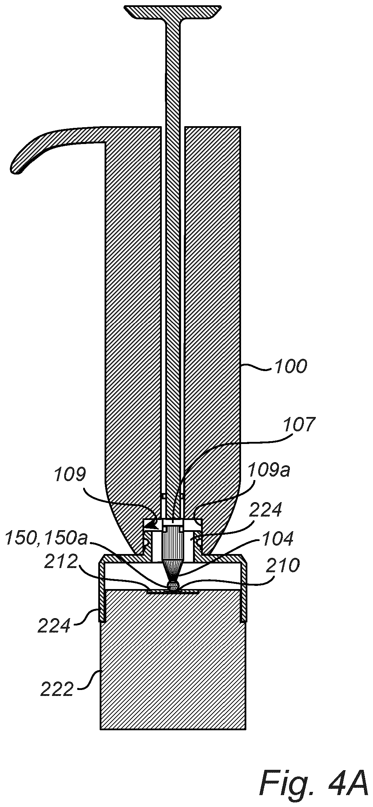

Now also turning to Fig. 4A. Fig. 4A illustrates in cross-section how the device 100 has been releasably attached to the substrate holder 220. To this end, the device 100 is provided with an attachment arrangement 109. The attachment arrangement 109 is configured to releasably attach the device 100 to the substrate holder 220 in a predetermined position in relation to the substrate holder 220. More specifically, the attachment arrangement 109 of the depicted device 100 comprises a circumferential inwardly facing surface 109a as best illustrated in Figs. 2A and 4A. The circumferential inwardly facing surface 109a of the depicted device 100 is arranged proximally of the tip 104. In other words, the circumferential inwardly facing surface 109a is located above the tip 104. The circumferential inwardly facing surface 109a is configured to engage a collar 224b circumscribing the opening 224a of the upper part 224 of the substrate holder 220. In this way, the tip 104 extends into the substrate holder 220 via the opening 224a when the device 100 is releasably attached to the substrate holder 220 as illustrated in Fig. 4A. As a result, the tip 104 becomes located slightly above the SERS substrate 210 while at the same time being centrally located with respect to the SERS substrate 210.

When the device 100 has been releasably attached to the substrate holder 220 as illustrated in Fig. 4A, the sample solution 150 may be transferred to the SERS substrate 210. More specifically, the sample solution 150 may be accurately transferred to the SERS substrate 210 in the sense that a highly controlled volume of sample solution 150 may be transferred to a central location of the SERS substrate 210. In practice, a droplet 150a of sample solution 150 may be formed by pushing the knob 108. The droplet 150a may when being formed contact the SERS substate 210 such that a sample volume in the form of the droplet 150a or a portion of the droplet 150a is transferred to the SERS substate 210. Thus, the sample volume may be accurately transferred to the SERS substate 210. The device 100 may then be removed from the substrate holder 220, leaving the opening 224a open to the ambient. As a result, solvent 103 of the sample volume may evaporate leaving at least a portion of the collected trace amount 110 adhered to the SERS surface of the SERS substrate 210.

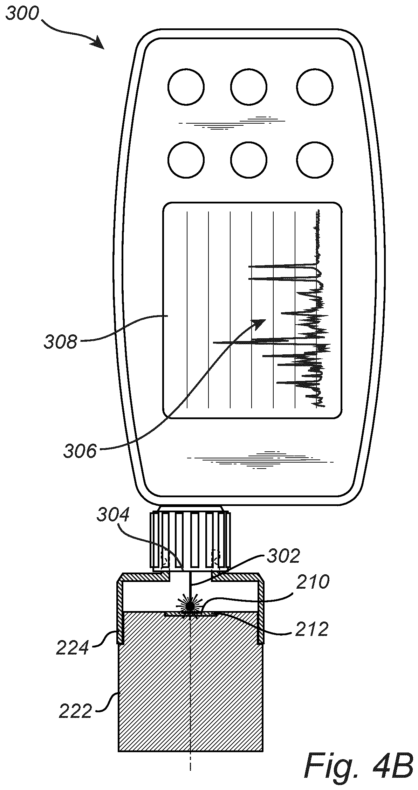

When the solvent 103 of the sample volume has evaporated, or when at least a major portion of the solvent 103 of the sample volume has evaporated, the SERS substrate 210 is ready to be subjected an analysis using a Raman spectroscopy device 300 as illustrated in Fig. 4B. Such an analysis may typically aim at determining the substance, i.e. the substance of the trace amount 110 collected by the tip 104 of the device 100.

Now also turning to Fig. 4B. Fig. 4B illustrates how a Raman spectroscopy device 300 has been releasably attached to the substrate holder 220. As illustrated in Fig. 4B, the Raman spectroscopy device 300 has been releasably attached to the substrate holder 220 at the opening 224a, such that light 302 (typically laser light) may reach the SERS substrate 210 via the opening 224a. More specifically, Fig. 4B illustrates how a handheld Raman spectroscopy device 300 suitable to be used under filed conditions has been releasably attached to the substrate holder 220 such that light 302 from a light exit aperture 304 of the handheld Raman spectroscopy device 300 impinges on the SERS substrate 210. In this way, the substance, i.e. the substance of the trace amount 110 collected by the tip 104 of the device 100, may be determined by analyzing the SERS substrate 210 by the Raman spectroscopy device 300. In practice, the substance may be determined via its unique Raman spectrum 306, i.e. its "fingerprint". The Raman spectrum 306 is illustrated as being displayed on a display 308 of the handheld Raman spectroscopy device 300.

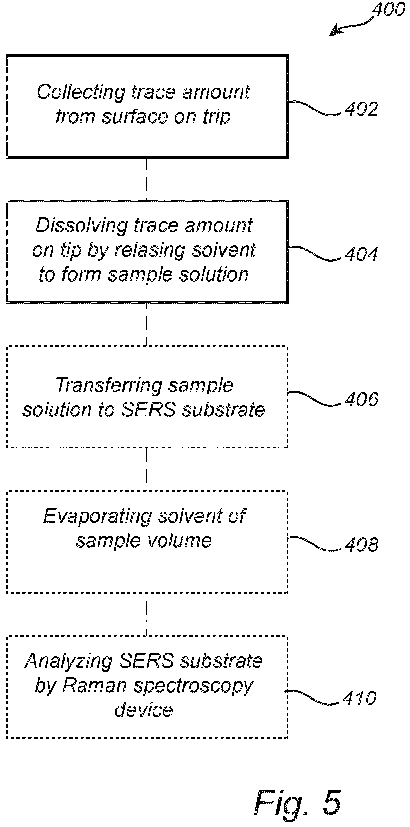

Now turning to Fig. 5. Fig 5 is a flow chart of a method 400 for preparation of, from a trace amount 110 of a substance present on a surface 120 a sample solution 150 to be transferred to a SERS substrate 210 using a device 100 of the above described kind.

The method 400 comprises collecting 402, on the tip 104, the trace amount 110 from the surface 120 by contacting the tip 104 with the trace amount 110. Thus, the trace amount 110 may be collected on the tip 104 by swabbing the surface 120 by the tip 104.

The method 400 proceeds by dissolving 404 the trace amount 110 on the tip 104 by releasing the solvent 103 onto the tip 104, thereby forming the sample solution 150. Thus, the trace amount 110 may be dissolved by the solvent permeating the tip 104 to reach the trace amount 110 collected on the tip.

The method 400 may further comprise, transferring 406 the sample solution 150 to the SERS substrate 210 by releasing, from the tip 104, a sample volume of the sample solution 150 onto the SERS substrate 210.

The method 400 may further comprise, evaporating 408, at least a major portion of the solvent 130 of the sample volume 150.

The method may further comprise, subsequently analyzing 410, by a Raman spectroscopy device 300, the SERS substrate 210 to determine the substance.

It will be appreciated that the present inventive concept is not limited to the variants and examples shown. Several modifications and variations are thus conceivable within the scope of the invention which thus is defined by the appended claims.

## Claims

1. A handheld device (100) for preparation of, from a trace amount (110) of a substance present on a surface (120), a sample solution (150) to be transferred to a SERS substrate (210), comprising:
a receptacle (102) configured to hold a solvent (103),
a tip (104) arranged at an end of the receptacle (102), and
a solvent ejection device (106) configured to release the solvent (103) from the receptacle (102) onto the tip (104),
wherein the tip (104) is configured to be contacted with the trace amount (110) to collect, on the tip (104), the trace amount (110) from the surface (120), and wherein the tip (104) is solvent permeable such that the solvent (103) upon being released onto the tip (104) permeates the tip (104) and dissolves the trace amount (110) on the tip (104) thereby forming the sample solution (150).

2. The device according to claim 1, wherein the tip (104) tapers towards a distal end (104a) thereof.

3. The device according to claim 2, wherein the distal end (104a) of the tip (104) has a tip angle (α) of 20-60 degrees, such as 30-50 degrees.

4. The device (100) according to any one of the preceding claims, wherein the tip (104) comprises one or more of a felt material, a non-woven material, a woven material, a flocked material, a set of bristles, a foamed material, a porous material, a fibrous material, a set of microchannels, a set of microchannels formed from metal, a porous polyethylene, fibrous polyethylene, flocked polyethylene, flocked nylon, polyurethane foam, polyester, nylon, polyethylene, polypropylene, polystyrene, acrylonitrile butadiene styrene, a thermoplastic elastomer, thermoplastic polyurethane, silicone, and rayon.

5. The device (100) according to any one of the preceding claims, wherein the solvent ejection device (106) is configured to release a predetermined volume of solvent (103) in response to being actuated.

6. The device (100) according to claim 5, wherein the predetermined volume of solvent corresponds to a volume of solvent required saturate the tip (104) and a surplus volume in a range of 25 µl to 250 µl, such as 50 µl to 150 µl.

7. The device (100) according to any one of the preceding claims, wherein the solvent ejection device (106) comprises a piston (107) arranged in the receptacle (102) and configured to release the solvent (103) from the receptacle (102) onto a proximal end (104b) of the tip (104) in response to being pushed or screwed along the receptacle (102) towards the tip (104).

8. The device (100) according to claim 7, when dependent on claim 5, wherein the piston (107) is configured to move a predetermined distance (d) along the receptacle (102) in response to being pushed or screwed along the receptacle (102) towards the tip (104), such that the predetermined volume of solvent (103) is released from the receptacle (102) onto the tip (104).

9. The device (100) according to any one of the preceding claims, wherein the device (100) further comprises an attachment arrangement (109) configured to releasably attach the device (100) to a substrate holder (220) in a predetermined position in relation to the substrate holder (220).

10. The device (100) according to claim 9, wherein the attachment arrangement (109) comprises a circumferential inwardly facing surface (109a), proximal of the tip (104), configured to engage a collar (224b) circumscribing an opening (224a) of the substrate holder (220), such that the tip (104) extends into the substrate holder (220) via the opening (224a).

11. A method (400) for preparation of, from a trace amount (110) of a substance present on a surface (120), a sample solution (150) to be transferred to a SERS substrate (210), using a device (100) according to any one of claims 1-10, the method (400) comprising:
collecting (402), on the tip (104), the trace amount (110) from the surface (120) by contacting the tip (104) with the trace amount (110), and
dissolving (404) the trace amount (110) on the tip (104) by releasing the solvent (103) onto the tip (104), thereby forming the sample solution (150).

12. The method (400) of claim 11, further comprising transferring (406) the sample solution (150) to the SERS substrate (210) by releasing, from the tip (104), a sample volume of the sample solution (150) onto the SERS substrate (210).

13. The method (400) of claim 12, further comprising evaporating (408), at least a major portion of the solvent (130) of the sample volume, and subsequently analyzing (410), by a Raman spectroscopy device (300), the SERS substrate (210) to determine the substance.

14. A kit (200) comprising:
a device (100) according to any one of claims 1-10,
a SERS substrate (210), and
a substrate holder (220) configured to receive and hold the SERS substrate (210) in a substrate location (222a) underneath an opening (224a) of the substrate holder (220), the opening (224a) being configured to selectively receive, the tip (104) and light (302) from a light exit aperture (304) of a Raman spectroscopy device (300).

15. The kit (200) according to claim 14, further comprising a solvent (103) of a first type, and optionally a solvent (103) of a second type, different from the first type, to be received in the receptacle (102).
